# EUROPEAN PATENT APPLICATION

(11) **EP 4 339 742 A1**
(43) Date of publication of application: **20.03.2024**
(21) Application number: 23189422.1
(22) Date of filing: 03.08.2023
(51) Int. Cl.: G06F 3/01, G10L 15/00

(54) **WORK SUPPORT SYSTEM AND WORK SUPPORT METHOD**

(30) Priority: 15.09.2022 JP 2022147325
(71) Applicant: Hitachi, Ltd., Tokyo 100-8280 (JP)
(72) Inventor: FERRER, Cesar Daniel Rojas, Tokyo, 100-8280 (JP); FUJIWARA, Takayuki, Tokyo, 100-8280 (JP)
(74) Representative: MERH-IP Matias Erny Reichl Hoffmann Patentanwälte PartG mbB

(57) **Abstract**

The invention is to appropriately support work of a worker. A work support system includes an imaging unit, a control unit, and a display unit. The imaging unit captures an image of a work site. The control unit specifies a region selected by the worker at the work site in the image as a work target region including a work target. The display unit displays text for supporting the work of the worker in the vicinity of the work target region of the image. The work support system includes a sensor unit configured to recognize a line of sight of the worker, and the control unit specifies a predetermined region from a center of the line of sight recognized by the sensor unit as the work target region.

## Description

### BACKGROUND OF THE INVENTION

### 1. Field of the Invention

The present invention relates to a work support system and a work support method.

### 2. Description of Related Art

An augmented reality (AR) technique is known in which a virtual world is superimposed on a real world. The AR technology is used in a system that supports work of a worker in a work environment such as a factory.

PTL 1 discloses an information processing apparatus that specifies, based on an orientation of a worker, a partial region in which a work target is present from a three-dimensional model in which a work site is reproduced, and specifies the work target from the specified partial region based on a geometric shape or color information of the specified partial region. Further, PTL 1 discloses that the information processing apparatus displays content information registered in association with the three-dimensional model in an AR-superimposed manner on an image obtained by imaging the work site.

PTL 2 discloses a method of position determination based on one or more real-world scenes that are imaged by a camera serving as a first device, and discloses that positioning information is transferred between the first device and a second device, and an item of virtual content is searched and placed.

### Citation List

### Patent Literature

PTL 1: JP2019-121136A
PTL 2: US11,200,729B

### SUMMARY OF THE INVENTION

In the information processing apparatus according to PTL 1, when an object having the same geometric shape and color information as the work target is displayed in the specified partial region, it is difficult to specify the work target. Further, since content creation (authoring) work in PTL 1 is performed in advance using a work support device (PC) at another site without being created by the worker himself or herself, two persons including the on-site worker and a remote administrator are required for the content creation work, and creation cost is incurred. In addition, in order to create new content, it is necessary to be familiar with knowledge about creation of XR content and a normal input gesture.

In PTL 2, there is a placement position based on correlation map data acquired from the devices. However, an input type necessary for content generation is ambiguous, and specified image data is also raw data (full image).

The invention is made in view of the above problems, and an object of the invention is to provide a technique for appropriately supporting work of a worker.

In order to solve the above problems, the invention includes: an imaging unit configured to capture an image of a work site; a control unit configured to specify a region selected by a worker at the work site in the image as a work target region including a work target; and a display unit configured to display text for supporting work of the worker in the vicinity of the work target region of the image.

According to the invention, the work of the worker can be appropriately supported.

### BRIEF DESCRIPTION OF THE DRAWINGS

FIG. 1 is a functional block diagram of a work support system;
FIG. 2 is a flowchart illustrating content creation processing;
FIG. 3 is a schematic view illustrating the content creation processing; and
FIG. 4 is a schematic view illustrating text moving processing.

### DESCRIPTION OF EMBODIMENTS

Hereinafter, a specific example of a work support system according to an embodiment of the invention will be described with reference to the drawings. The invention is not limited to the example, and is indicated by the scope of the claims.

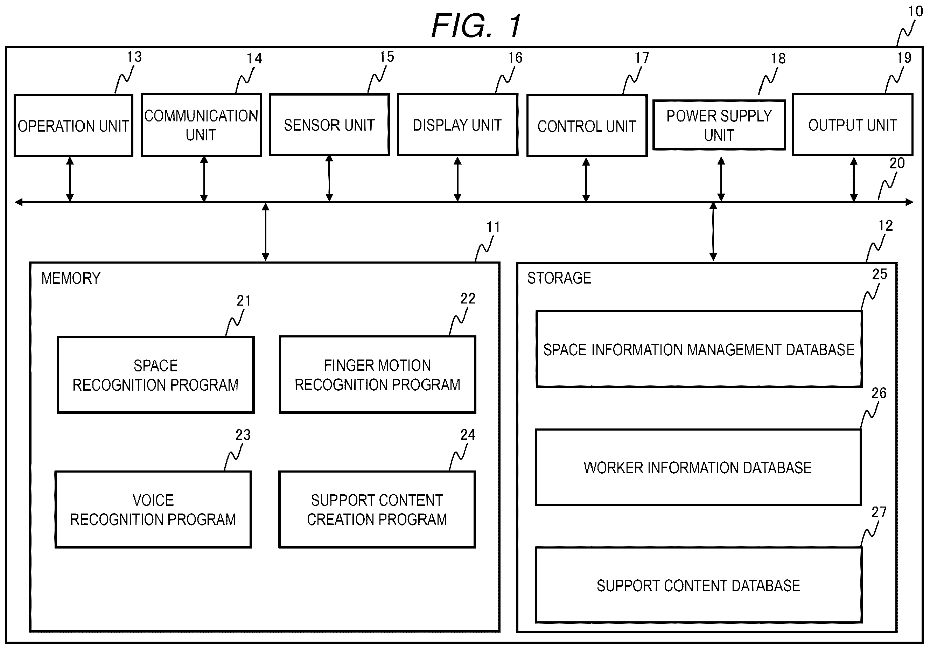

FIG. 1 is a functional block diagram of a work support system.

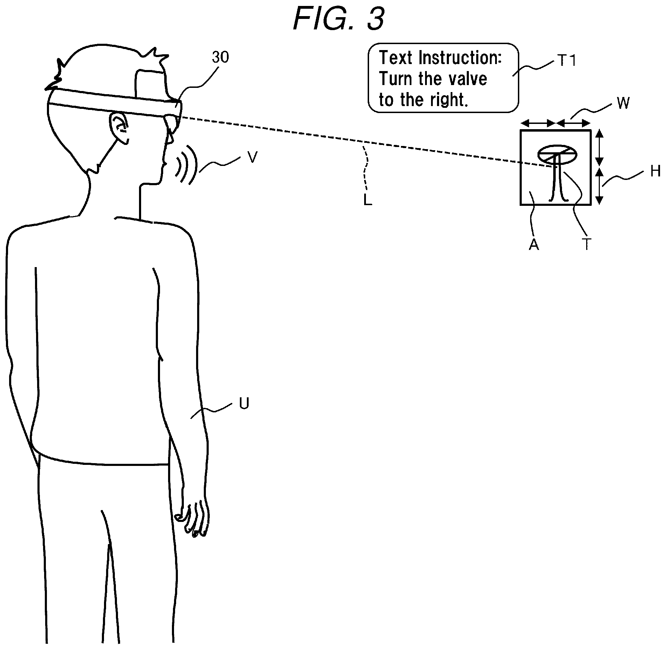

A work support system 10 is a system that displays text T1 (see FIG. 3) for supporting work of a worker U (see FIG. 3) on an image obtained by imaging a work site. The work site is, for example, a work environment such as a factory. The text T1 is, for example, character information displayed on the image.

The work support system 10 includes a memory 11, a storage 12, an operation unit 13, a communication unit 14, a sensor unit 15 as an example of a "first sensor unit" and a "second sensor unit", a display unit 16, a control unit 17, a power supply unit 18, and an output unit 19.

The memory 11, the storage 12, the operation unit 13, the communication unit 14, the sensor unit 15, the display unit 16, the control unit 17, the power supply unit 18, and the output unit 19 are communicably connected via a network 20.

The memory 11 includes a semi-conductor storage medium such as a random access memory (RAM), a read only memory (ROM), and a solid state drive (SSD), and the like. The memory 11 stores a space recognition program 21, a finger motion recognition program 22, a voice recognition program 23, and a support content creation program 24.

The space recognition program 21 is a program for recognizing a space in the work site. The finger motion recognition program 22 is a program for recognizing a motion of a finger of the worker U. The voice recognition program 23 is a program for recognizing a voice V (see FIG. 3) uttered by the worker U. The support content creation program 24 is a program for displaying the text T1 for supporting the work of the worker U on the image obtained by imaging the work site.

The storage 12 is a hard disk drive (HDD). The storage 12 stores a space information management database 25, a worker information database 26, and a support content database 27.

The space information management database 25 stores space information on the space in the work site. The space information may include position information of a floor, a wall, a ceiling, a work target, a device other than a work target T (see FIG. 3), and the like that partitions the work site.

The worker information database 26 stores worker information on the worker U. The worker information may include information such as a group to which the worker U belongs, a post, experience, and a height of the worker U.

The support content database 27 stores support content information on support content including the text T1 for supporting the work of the worker U. The support content information may include a work instruction to the worker U and work cautions.

The operation unit 13 is an input device such as a keyboard or a mouse. The operation unit 13 is operated by an administrator of the worker U to input an instruction into the work support system 10.

The communication unit 14 is connected to an external network wirelessly or by wire. The communication unit 14 may be an interface that performs data communication with another device via the network.

The sensor unit 15 is, for example, a camera. The sensor unit 15 captures an image of front of the worker U. The sensor unit 15 may capture an image of the motion of the finger of the worker U. The sensor unit 15 functions as an example of the "first sensor unit" that recognizes a line of sight of the worker U based on the captured image of the work site. Further, the sensor unit 15 functions as an example of the "second sensor unit" that recognizes the motion of the finger of the worker U.

The display unit 16 is, for example, a screen of a head-mounted display (hereinafter referred to as HMD) 30 (see FIG. 3) mounted on the worker U. The display unit 16 displays the image obtained by imaging the work site and text for supporting the work of the worker U (see FIG. 3) on the image. The sensor unit 15, an imaging unit (camera) that captures an image of a work site, and a voice unit (microphone) that recognizes the voice V of the worker may be attached to the HMD 30. The imaging unit may also serve as the sensor unit 15 (camera).

The control unit 17 is, for example, a central processing unit (CPU), a graphics processing unit (GPU), a field-programmable gate array (FPGA), or an application specific integrated circuit (ASIC). The control unit 17 specifies a region selected by the worker U in the image as a work target region A (see FIG. 3) including the work target T.

The control unit 17 may specify a predetermined region from a center of a line of sight L of the worker recognized by the sensor unit 15 as the work target region A. The control unit 17 may specify the region selected with the finger of the worker recognized by the sensor unit 15 as the work target region A. Further, the control unit 17 may specify a rectangular region indicated by the finger of the worker recognized by the sensor unit 15 as the work target region A. At this time, the worker may indicate the rectangle with fingers of both hands or by drawing a rectangle with one finger.

The power supply unit 18 is an externally connected device such as a battery or an outlet. The power supply unit 18 supplies power to the work support system 10.

The output unit 19 is an output device such as a display. The output unit 19 outputs data stored in the storage 12 based on the instruction from the administrator of the worker U.

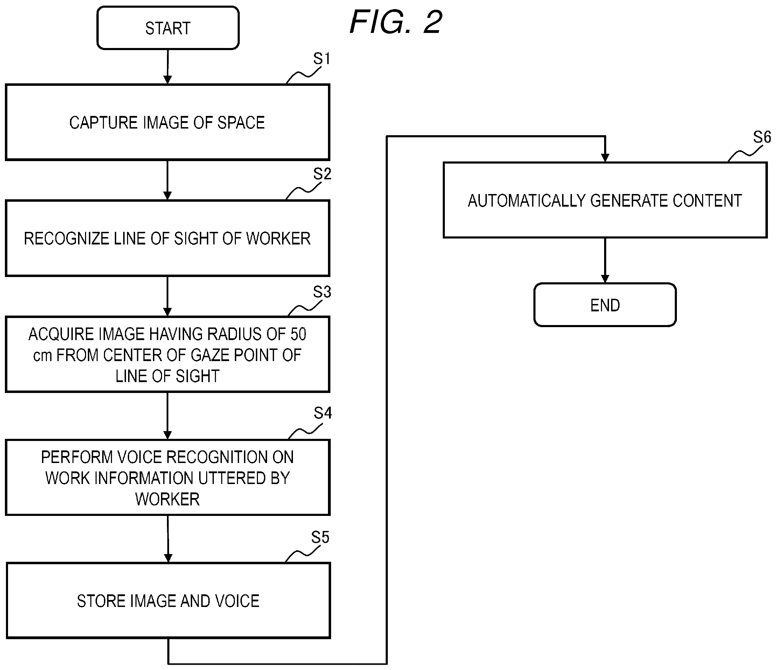

FIG. 2 is a flowchart illustrating content creation processing.

The imaging unit (camera) attached to the HMD 30 captures (scans) an image of the work site (S1). Next, the sensor unit 15 recognizes the line of sight L of the worker U at the work site (S2).

Next, based on the image of the work site, the control unit 17 acquires a rectangular region having a radius of 50 cm from a center of a gaze point of the line of sight L as the work target region A including the work target T (S3). Next, the voice unit (microphone) attached to the HMD 30 performs voice recognition on work information uttered by the worker U (S4).

Next, the support content database 27 stores the image acquired by the control unit 17 and the voice V recognized by the voice unit (microphone) (S5). Next, the control unit 17 converts the voice recognized by the voice unit (microphone) into text, and generates content in which the converted text is displayed in the vicinity of the work target region A of the image stored in the support content database 27 (S6) .

FIG. 3 is a schematic view illustrating the content creation processing.

The HMD 30 is mounted on the worker U in a state of covering eyes of the worker U. The imaging unit attached to the HMD 30 captures the image of the work site including the work target T. In FIG. 3, the text T1 is displayed on the screen (display unit 16) of the HMD 30.

The sensor unit 15 attached to the HMD 30 recognizes the line of sight L of the worker U when the worker U gazes at the work target T. The work target T is, for example, a pipe valve. The work target T is operated by the worker U. Here, the control unit 17 may determine that the worker U gazes at the work target T when the image captured by the sensor unit 15 is stationary over a predetermined time or more.

Based on the image of the work site, the control unit 17 acquires the rectangular work target region A having a width W and a height H of 50 cm respectively from the center (work target T) of the line of sight L. The work target region A is not limited to a rectangle and may be a circle or an ellipse. At this time, the voice unit (microphone) attached to the HMD 30 recognizes the voice V uttered by the worker U.

The control unit 17 displays the text T1 in the vicinity of the work target region A of the image displayed on the screen (display unit 16) of the HMD 30. The text T1 is, for example, "Text Instruction: Turn the valve to the right".

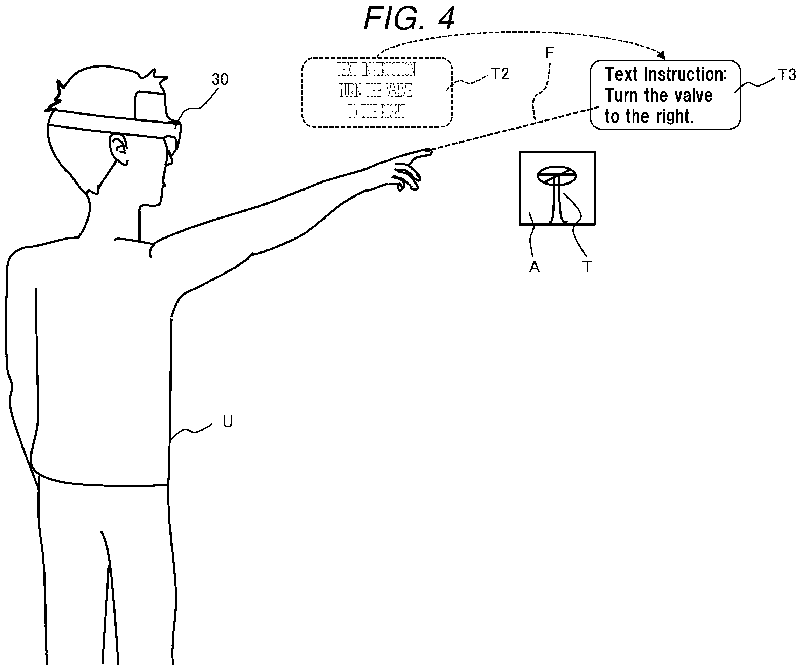

FIG. 4 is a schematic view illustrating text moving processing.

The screen (display unit 16) of the HMD 30 can move text T2 displayed in the vicinity of the work target region A according to the motion of the finger of the worker recognized by the sensor unit 15. For example, when the worker U designates the text T2 displayed at the upper left of the work target region A with the finger and then moves a pointing direction F to another position (right side in FIG. 4), text T3 is displayed at the upper right of the work target region A.

According to this configuration, the work support system 10 includes the imaging unit, the control unit 17, and the display unit 16. The imaging unit captures the image of the work site. The control unit 17 specifies the region selected by the worker U at the work site in the image as the work target region A including the work target T. The display unit 16 displays the text T1 for supporting the work of the worker U in the vicinity of the work target region A of the image. Accordingly, since the text T1 is displayed in the vicinity of the work target region A of the image, the work of the worker U can be appropriately supported.

Further, the sensor unit 15 that recognizes the line of sight L of the worker U is provided, and the control unit 17 specifies the predetermined region from the center of the line of sight L recognized by the sensor unit 15 as the work target region A. Accordingly, the work target region A including the work target T can be appropriately recognized based on the line of sight L of the worker U.

Further, the sensor unit 15 that recognizes the motion of the finger of the worker U is provided, and the control unit 17 specifies the region selected with the finger recognized by the sensor unit 15 as the work target region A. Accordingly, erroneous recognition of the work target region A can be prevented.

Further, the voice unit that recognizes the voice V of the worker U is provided, and the control unit 17 converts the voice V recognized by the voice unit into the text T1. Accordingly, the text T1 can be displayed in real time at the work site.

Further, the display unit 16 moves the text T2 displayed in the image according to the motion of the finger recognized by the sensor unit 15. Accordingly, visibility is improved for the worker U.

Further, the control unit 17 specifies the rectangular region indicated by the finger recognized by the sensor unit 15 as the work target region A. Accordingly, the erroneous recognition of the work target region A can be prevented.

Further, the display unit 16 is the HMD 30 mounted on the worker U, and the imaging unit and the sensor unit 15 are attached to the HMD 30.

The invention is not limited to the above-described example, and includes various modifications. For example, the above-described example is described in detail to facilitate understanding of the invention, and the invention is not necessarily limited to those including all the configurations described above.

For example, in the above-described example, a predetermined region from the center of the line of sight L or a region selected with a finger, which is recognized by the sensor unit 15, is specified as the work target region A, but the invention is not limited thereto. A region in which the predetermined region from the center of the line of sight L recognized by the sensor unit 15 and the region selected with the finger recognized by the sensor unit 15 overlap each other may be specified as the work target region A. Accordingly, accuracy of recognizing the work target region A including the work target T is improved.

## Claims

1. A work support system comprising:
an imaging unit configured to capture an image of a work site;
a control unit configured to specify a region selected by a worker at the work site in the image as a work target region including a work target; and
a display unit configured to display text for supporting work of the worker in the vicinity of the work target region of the image.

2. The work support system according to claim 1, further comprising:
a first sensor unit configured to recognize a line of sight of the worker, wherein
the control unit specifies a predetermined region from a center of the line of sight recognized by the first sensor unit as the work target region.

3. The work support system according to claim 1, further comprising:
a second sensor unit configured to recognize a motion of a finger of the worker, wherein
the control unit specifies a region selected with the finger recognized by the second sensor unit as the work target region.

4. The work support system according to claim 2, further comprising:
a second sensor unit configured to recognize a motion of a finger of the worker, wherein
the control unit specifies, as the work target region, a region in which the predetermined region from the center of the line of sight recognized by the first sensor unit and a region selected with the finger recognized by the second sensor unit overlap each other.

5. The work support system according to claim 1, further comprising:
a voice unit configured to recognize a voice of the worker, wherein
the control unit converts the voice recognized by the voice unit into the text.

6. The work support system according to claim 3, wherein
the display unit moves the text displayed in the image according to the motion of the finger recognized by the second sensor unit.

7. The work support system according to claim 1, wherein
the control unit specifies a rectangular region indicated by a finger recognized by a second sensor unit as the work target region.

8. The work support system according to claim 2, wherein
the display unit is a head-mounted display mounted on the worker, and
the imaging unit and the sensor unit are attached to the head-mounted display.

9. A work support method comprising:
capturing an image of a work site;
recognizing a line of sight of a worker at the work site;
specifying a predetermined region from a center of the line of sight of the worker as a work target region including a work target; and
displaying text for supporting work of the worker in the vicinity of the work target region displayed in the image.
